# EUROPÄISCHE PATENTSCHRIFT

(11) **EP 0 445 400 B1**
(45) Veröffentlichungstag und Bekanntmachung des Hinweises auf die Patenterteilung: **09.03.1994**
(21) Anmeldenummer: 90124511.8
(22) Anmeldetag: 18.12.1990
(51) Int. Cl.: C04B 35/54, C04B 38/00, E04B 1/94

(54) **Verfahren zur Herstellung intumeszenzfähiger Formteile**
Process for preparing intumescent moulded articles
Procédé de préparation des articles moulés intumescents

(30) Priorität: 07.03.1990 DE 4007075
(43) Veröffentlichungstag der Anmeldung: 11.09.1991
(73) Patentinhaber: BAYER AG, 51368 Leverkusen (DE)
(72) Erfinder: von Bonin, Wulf, Dr., W-5068 Odenthal (DE)

(56) Entgegenhaltungen:
- EP-A- 0 189 674
- WO-A-83/02120
- DE-A- 2 430 720
- US-A- 3 885 007
- US-A- 4 293 450
- JOURNAL OF MATERIALS SCIENCE. vol. 22, no. 12, Dezember 1987, LONDON GB Seiten 4190 - 4198; D.D.L. Chung: "Exfoliation of graphite"

## Beschreibung

Die vorliegende Erfindung betrifft ein Verfahren zur Herstellung intumeszenzfähiger Formteile.

Es ist bekannt, daß Blähgraphitmaterialien aufgrund ihrer Intumeszenzfähigkeit im vorbeugenden Brandschutz Verwendung finden, weil sie bei Temperaturen oberhalb ca. 150°C expandieren und so einen wenig brennenden Schutz bilden bzw. Hohlräume, durch die Brandgase hindurchtreten würden, verschließen. Bisher wurden hierzu nicht expandierte Blähgraphite in durch Polymere gebundener Form eingesetzt. Ungebunden läßt sich Blähgraphit auch unter hohen Drucken (z.B. 50 - 100 bar) bei Temperaturen unter 150°C nicht zu stabilen Formteilen verpressen.

Es wurde nun ein Verfahren zur Herstellung intumeszenzfähiger Formteile gefunden, das dadurch gekennzeichnet ist, daß man Blähgraphite in Formen auf Temperaturen zwischen 150 und 350°C erhitzt. Obgleich Blähgraphitmaterialien bei 150-250°C aufschäumen, wurde überraschenderweise gefunden, daß man auf diese Weise stabile Formteile erhält, die trotz der Vorerhitzung noch überraschenderweise ähnliche Intumeszenzeigenschaften aufweisen wie nicht erhitzter Blähgraphit.

Man kann auch Gemische aus Blähgraphiten und Bindemitteln, gegebenenfalls unter Zusatz von Füllstoffen, in Formen auf Temperaturen zwischen 150 und 350°C erhitzen. Bei den Formen handelt es sich vorzugsweise um geschlossene, gasdurchlässige Formen.

Zur Durchführung des erfindungsgemäßen Verfahrens können Blähgraphitmaterialien verwendet werden, die durch Einlagerung von expansiven Molekülen in die Zwischengitterebenen erhalten wurden und die bei Erhitzung auf Temperaturen über beispielsweise 120°C zu expandieren in der Lage sind. Als solche kommen vorzugsweise Graphite in Frage, in die beispielsweise NOₓ, SOₓ, Halogene, Wasser und/oder eine starke Säure eingelagert sind. Es können auch Gemische verschiedener Typen von Blähgraphiten Verwendung finden.

Gemäß einer besonderen Ausführungsform des erfindungsgemäßen Verfahrens werden zusätzlich Bindemittel verwendet. Dabei können die Blähgraphitmaterialien zuvor mit einem, bei Verarbeitungstemperatur schmelzbaren, erweichenden, unter gegebenenfalls intermediärer Verflüssigung zersetzlichen oder gegebenenfalls intumeszierenden Bindemittel gemischt werden. Dadurch wird die Stabilität und gegebenenfalls die Intumeszenzfähigkeit der erhaltenen Formteile erhöht. Als Bindemittel kommen dabei prinzipiell sämtliche Bindemittel in Frage, die beispielsweise für Mineralstoffe, Fasern, Holz oder Naturstoffe Verwendung finden können. Es kann sich dabei um reaktive oder nicht reaktive Bindemittel, beispielsweise Polymere, Oligomere oder Monomere sowie Dispersionen, Lösungen oder Reinsubstanzen von beispielsweise Polyvinylverbindungen, Polyesterharzen, Epoxidharzen, Formaldehydharzen, Furan- oder Cumaronharzen (beispielsweise auf Basis von Phenol, Melamin, Harnstoff, Dicyandiamid), Isocyanatharzen, Cyanuratharzen, Polyurethanen, Polyimidharzen oder Cyanatharzen handeln.

Vorzugsweise verwendet man solche Bindemittel oder Bindemittelgemische, die bei Beflammung nicht oder nur sehr raucharm brennen und die bei den bevorzugten Verarbeitungstemperaturen schmelzen, erweichen, unter intermediärer Zersetzung schmelzen oder erweichen oder gegebenenfalls selbst intumeszieren.

Als solche Bindemittel seien beispielsweise genannt: Hydrate anorganischer Salze, beispielsweise Hydrate von Alkali- oder Erdalkalisulfaten, -phosphaten, -boraten, -glukonaten, -phosphonaten, -silikaten, -borsilikaten, -acetaten, -oxalaten, -tartraten, -maleaten; weiterhin Phosphate, Phosphonate, Borate von Ammoniak oder Aminen, wie beispielsweise Ethylendiamin, Melamin. Weiterhin seien genannt Kohlenhydrate wie die verschiedensten Zucker oder zuckerähnliche Stoffe, wie beispielsweise Pentaerythrit, Melassen, Zuckersirupe, Naturgumme, Rohr- oder Invertzucker, Hydroxyethyl- bzw. Carboxymethylcellulose, Dextrane, Holz-, Stroh-, Weizen-, Reis-, Sojamehl, Klärschlamm. Weiterhin Peptide wie beispielsweise Hühner-, Milch- oder Schlachthofeiweiße. Außerdem Teere, Bitumen, Destillationsrückstände. Weiterhin seien genannt Harnstoff, dessen Kondensationsprodukte, Dicyandiamid, Hydrazodicarbonamid, Cyanursäure und deren Abkömmlinge.

Besonders bevorzugt verwendet man Zucker, Bitumen, Melamin, Dicyandiamid, Harnstoff, neutrales Ethylendiaminphosphat, Ammoniumphosphat, Perlit, Vermikulit, Ca-Sulfathydrate, Alkalisilikathydrate oder Borax, gegebenenfalls auch Gemische der obengenannten Stoffe.

Ganz besonders bevorzugt ist neutral reagierendes Ethylendiaminphosphat.

Die oben aufgeführten Bindemittel können den Blähgraphitmaterialien in Mengen von beispielsweise 0 bis 80 Gew.-%, vorzugsweise 5 bis 50 Gew.-% (bezogen auf Blähgraphit), zugesetzt werden.

Es können auch Gemische aus Blähgraphiten, gegebenenfalls Bindemitteln und üblichen Füllstoffen zur Durchführung des erfindungsgemäßen Verfahrens verwendet werden. Als Füllstoffe kommen beispielsweise Kreide, Asbest, Metallpulver, Metalloxide, Metallhydroxide, Silikate, Kohlenstoff, Gesteinsmehl, Glas, Schlacken, Filterstäube und Aschen in Frage.

Die Füllstoffe können in Mengen von beispielsweise 0 bis 1000 Gew.-%, vorzugsweise 0 bis 500 Gew.-% (bezogen auf Blähgraphit), zugesetzt werden.

In bestimmten Fällen, beispielsweise bei der Herstellung von Platten, kann es von Vorteil sein, dem Gemisch aus Blähgraphiten und gegebenenfalls Bindemitteln verstärkende Fasern zuzusetzen. Geeignet sind dafür beispielsweise Fasern folgender Materialien: Glas, Metall, Cellulose, Kohlenstoff, Polyimid, Polyaramid, Asbest, Tonerde oder Mineralschmelze (Steinwolle).

Die Fasern können beispielsweise in Mengen von 0 bis 750 Gew.-%, vorzugsweise 0 bis 500 Gew.-% (bezogen auf Blähgraphit), zugesetzt werden.

Die Füllung der Formen kann durch lockeres Einblasen oder Einschütten des vorzugsweise flockigen oder granulierten Graphitmaterials komplett oder partiell erfolgen. Es kann aber auch durch Einpressen bei Temperaturen unter 150°C, vorzugsweise bei Temperaturen von 20 bis 120°C, eingebracht werden.

Die Formen können mit einem Trennmittel geschützt werden, als solche kommen beispielsweise Tatkum oder Graphit in Frage, gegebenenfalls als wäßrige Dispersion.

Die Erhitzung der gefüllten Formen erfolgt erfindungsgemäß auf Temperaturen zwischen 150 und 350°C, vorzugsweise auf 200 bis 300°C. Höhere Temperaturen bis beispielsweise 600°C sind zwar möglich, ergeben aber zumeist weniger gut intumeszierende Formteile. Die erhaltenen Formteile können Raumgewichte von beispielsweise 200 bis 900, vorzugsweise 350 bis 700 kg/m³ aufweisen.

Bei den Formteilen, die erfindungsgemäß durch Erhitzen von Blähgraphiten, gegebenenfalls in Gegenwart von Bindemitteln und gegebenenfalls unter Zusatz von Füllstoffen und/oder Fasern in Formen auf Temperaturen zwischen 150 und 350°C erhalten werden, kann es sich beispielsweise um Platten, Quader, Rohre, Profile oder Halbschalen handeln.

Die Durchführung des erfindungsgemäßen Verfahrens erfolgt nach allgemein bekannter Methode. Will man Platten herstellen, so kann man beispielsweise einen Distanzrahmen, der talkumiert und aus Stahl gefertigt ist, zwischen die ebenfalls talkumierten Platten einer beheizbaren Presse legen und mit dem Blähgraphitmaterial gestrichen füllen. Es kann sich dabei auch um bindemittelhaltiges, füllstoffhaltiges und/oder faserhaltiges Blähgraphitmaterial handeln. Zwischen Plattenpresse und Füllung des Distanzrahmens kann auch noch ein Trägermaterial, sei es kompakt, z.B. ein Blech, Holz, Keramik, ein textiles Gebilde oder ein Schaumstoff, einseitig, doppelseitig oder partiell angebracht werden, so daß eine Sandwichplatte entsteht. Hierbei kann es sich beispielsweise um Glasvlies, Glasgewebe, Polyaramidgewebe, metallische Bleche oder keramische Platten bzw. Kohlenstoffplatten, Mineralfaserplatten, Ca-Silikatplatten, Schichtstoffplatten oder Zementplatten verschiedenster Art handeln.

Wenn eine oder mehrere Deckschichten auf dem erfindungsgemäß herzustellenden Formteil gleich bei dessen Herstellung angebracht werden sollen, verwendet man vorzugsweise ein Material, welches möglichst gut wärmeleitend ist.

Nachdem die gegebenenfalls vorzunehmenden ergänzenden Manipulationen wie beispielsweise Justieren, Einlage von Verdrängungskörpern, Trennmittelauftrag, erfolgt sind, wird die Presse zugefahren und je nach Formteildicke und Heizleistung der Presse beispielsweise 5 Minuten bis zu 1,5 Stunden und mehr auf beispielsweise 240°C erhitzt. Dann wird zweckmäßigerweise auf Temperaturen unter 150°C abgekühlt und das Formteil aus der Presse entnommen. Man erhält eine stabile Platte, die gegebenenfalls als vollständiger oder partieller Sandwich ausgebildet sein kann und bei Beflammung heftig intumesziert.

Kompliziertere Formteile können zweckmäßigerweise in einer aus verschiedenen hinterschneidungsfreien Teilen zusammensetzbaren Metallform hergestellt werden. Diese wird talkumiert und mit dem Blähgraphitmaterial gefüllt. Dann kann soweit geschlossen werden, daß noch genügend Undichtigkeiten gegeben sind, aus denen die Expansionsgase entweichen können. Dann erhitzt man beispielsweise 0,1 bis 2 Stunden auf beispielsweise 250°C, kühlt ab und entnimmt das fertige Formteil. Wenn die Form mit reinem Blähgraphitmaterial (Flockenform) gefüllt war, liegt das erhaltene Raumgewicht zumeist in der Größenordnung von 0,5 g/cm³. Das Formteil ist mechanisch stabil, bearbeitbar und intumesziert bei Beflammung heftig, d.h., das Volumen expandiert beispielsweise um mehr als 300 %.

Solche Formkörper können auch mit sogenannter "verlorener" Form hergestellt werden, beispielsweise indem die Metallform einer Rohrmanschette zumindest außenseitig auf dem Formteil verbleibt, so daß die mit dem Blähgraphitmaterial mechanisch stabil gefüllte Manschette durch die Blechhaut geschützt ist und dazu verwendet werden kann, Rohre (partiell) zu ummanteln, so daß sie dort, wo die Manschette durch Brandeinwirkung erhitzt wird das Rohr wegen ihrer Intumeszenz (Expansion), die nach innen gerichtet ist, abquetscht und verschließt.

Es können auch gitter- oder siebartige Formteile hergestellt werden, die beispielsweise in Durchlaßöffnungen für Gase eingesetzt werden können, die sich bei entsprechender Erhitzung dieser Öffnungen durch Intumeszenz verschließen. Mit Hilfe der erfindungsgemäßen Formteile können auch Vorrichtungen hergestellt werden, die bei Erhitzung auf andere Konstruktionselemente einen mechanischen Druck ausüben und so Verschlüsse betätigen bzw. Schalter aktivieren, Sperren lösen oder betätigen.

Überraschenderweise werden bei dem erfindungsgemäßen Verfahren trotz der notgedrungen, durch die weitgehende Geschlossenheit der Formen zwar eingeschränkten aber durchaus erfolgenden Expansion des Graphitmaterials, die Expansionsgase nur unvollständig freigesetzt, so daß eine weitere Expansion des Graphitmaterials bei Beflammung eintritt. Fernerhin werden dabei in den Formen relativ formstabile und gegebenenfalls wenig oder keine Bindemittel bzw. organische Hilfsstoffe benötigende Formkörper erzeugt. Diese lassen sich z.B. als intumeszenzfähige Formteile bzw. Bau- und Konstruktionselemente für Zwecke des vorbeugenden Brandschutzes verwenden oder für andere Zwecke, bei denen z.B. schaumstoffartige Graphitformteile mit Raumgewichten unter 1000 kg/m³ und gegebenenfalls Intumeszenzfähigkeit und/oder gewisser Leitfähigkeit für Elektrizität oder Wärme benötigt werden.

### Beispiele:

In den folgenden Beispielen beziehen sich die angegebenen Prozente und Teile auf das Gewicht, sofern nichts anderes angegeben ist.

In den folgenden Beispielen wurden verwendet:
Blähgraphit A.
Das ist ein flockiges Handelsprodukt vom SOₓ-Typ mit einer Expansion bei 600°C (ohne Gegendruck) von über 500 Vol.-%.
Blähgraphit B.
Das ist ein flockiges Handelsprodukt vom NOₓ-Typ mit einer Expansion bei 600°C (ohne Gegendruck) von über 500 Vol.-%.

Als Form wurde ein auseinandernehmbarer, 2 cm hoher Stahlrahmen verwendet, der ein Innenmaß von 10 x 10 cm hatte und beidseitig mit zwei planen Stahlplatten verschraubt war. Dieser Aufbau wurde gestrichen mit der Blähgraphitmischung bzw. dem Blähgraphit gefüllt und in einen auf die jeweilige Reaktionstemperatur vorgeheizten Ofen gebracht und dort 1,5 Stunden belassen. Dann wurde auf Raumtemperatur abgekühlt und aus der Form entnommen. Als Trennmittel wurde Talkum oder Schutzpapier verwendet.

### Beispiel 1

In der Form wurde der Stahlrahmen wegen aktiver Pressung bei diesem Vergleichsversuch durch einen Rahmen aus Moosgummi ersetzt. Dann wurde mit Blähgraphit B gefüllt, eine Minute bei 30 bar gepreßt, dann nochmals aufgefüllt und dann 15 Minuten bei Raumtemperatur mit 75 bar verpreßt. Der so erhaltene Preßkuchen zerfiel beim Entformen, er hatte keine mechanische Stabilität. Jetzt wurde die Form mit Stahlrahmen versehen und mit Blähgraphit B gefüllt und nach Verschließen auf 100°C getempert. Der Versuch wurde mit anderen gleichartigen Füllungen bei
150,200,250,300,350,400,600°C
wiederholt. Beim Entformen zeigte sich, daß erst ab 150°C das Formteil, ohne zu zerfallen, entformt werden kann. Ab 200 bis 600°C wurden Platten mit guter Stabilität erhalten. Beim Beflammen zeigte sich, daß ab etwa 400°C Reaktionstemperatur die Intumeszenz der Platte deutlich nachließ. Es wurden Quader aus den Platten geschnitten und in einen auf 700°C vorgeheizten Ofen gebracht. Nach 15 Minuten (gemessen als freie Schüttung) war die Expansion des Graphitmaterials bei 100 bis 350°C Reaktionstemperatur über 500 Vol.-%, bei 400°C Reaktionstemperatur etwa 450 Vol.-% und bei 600°C unter 15 Vol.-%.

Es wurde nun anstelle von Blähgraphit B Blähgraphit A verwendet, wobei analoge Ergebnisse erhalten wurden. Die Versuche zeigten, daß beim Erhitzen von Blähgraphit in geschlossenen Formen auf Temperaturen zwischen 150 und 350°C überraschenderweise stabile und intumeszenzfähige Formkörper erhalten werden können.

### Beispiel 2

Es wurden Mischungen hergestellt aus 15 % Bindemittel und 85 % Blähgraphit A. Es wurden folgende Bindemittel in Pulverform verwendet:
- a:: Rohrzucker
- b:: Hartbitumen, ausgeblasen
- c:: Melamin
- d:: Dicyandiamid
- e:: Harnstoff
- f:: Ethylendiaminphosphat, neutral
- g:: Gemisch aus 50 % Pentaerythrit
und 50 % sekundärem Ammoniumphosphat

Ferner wurden Mischungen hergestellt aus 70 % Blähgraphit B und 30 % Bindemittel:
- h:: Perlitgranulat
- i:: Vermikulitgranulat
- k:: Calciumsulfatdihydrat
- l:: Natriumwasserglas-Sprühtrockenpulver, basisch
(Fa. Henkel)
- m:: Borax
- n:: Soda, Natriumbicarbonat, Kreide (Verhältnis 1:1:1)

Die Gemische a bis n wurden in die Stahlform eingebracht und 1,5 Stunden bei 250°C getempert. Nach dem Abkühlen wurde aus der Form entnommen. In allen Fällen wurden mechanisch stabile Formkörper erhalten. Die Platten von 2 cm Stärke hatten ein Raumgewicht zwischen 450 und etwa 650 kg/m³. Die Expansion bei 750°C betrug in allen Fällen nach 15 Minuten mehr als 500 Vol.-%.

### Beispiel 3

In die Plattenform wurden 70 g, 100 g, 130 g Blähgraphit B eingebracht. Nach dem Tempern bei 260°C wurden stabile Platten mit Raumgewichten von etwa 0,35, 0,48, 0,64 g/cm³ erhalten, die bei Beflammung kräftig intumeszierten.

### Beispiel 4

In die Plattenform wurden 100 g eines Gemisches aus Ethylendiaminphosphat (neutral) und 95,90,85,70 oder 50 % Blähgraphit B eingebracht und bei 250°C zur Reaktion gebracht. Nach dem Abkühlen erhielt man stabile Platten mit Raumgewichten um 0,5 g/cm³, die bei Beflammung kräftig intumeszierten.

Zum Vergleich des Aufschäumverhaltens eines Quaders, der aus der 85 % Blähgraphit enthaltenden Mischung hergestellt wurde mit einem bei gleicher Temperatur hergestellten Quader aus Blähgraphit ohne Zusatz des Bindemittels, wurden beide Quader in einen auf 300°C vorgeheizten Ofen gebracht. Es zeigte sich, daß der bindemittelhaltige Quader etwa 50 % stärker intumeszierte als der bindemittelfreie Quader. Dieser Effekt ist überraschend.

### Beispiel 5

In einem Mischer wurde ein Gemisch aus 30 Teilen Kurzglasfasern sowie 70 Teilen Blähgraphit A sowie 30 Teilen Ethylendiaminphosphat hergestellt. Die Plattenform wurde mit 110 Teilen des Gemisches gefüllt und 1 Stunde auf 300°C gebracht. Man erhielt eine mechanisch sehr stabile Platte vom Raumgewicht ca. 510 kg/m³, die bei Beflammung noch heftig intumeszierte. Durch die Faserverstärkung fand ein verbesserter Zusammenhalt der expandierenden Graphitteilchen statt.

### Beispiel 6

In der Plattenform wurde ein Glasfasergewebe mit Leinenbindung (650 g/m²) zwischen die beiden Deckenplatten und den mit einem Gemisch aus 15 % Ethylendiaminphosphat und 85 % Blähgraphit B gefüllten Distanzrahmen eingebracht. Dann wurde 100 Minuten auf 260°C erhitzt. Nach dem Abkühlen erhielt man eine stabile Sandwichplatte, die bei Beflammung hervorragend intumeszierte.

### Beispiel 7

Zwei talkumierte Stahlrohre wurden ineinander achsparallel zentriert, so daß der Zwischenraum eine Röhre von ca. 2,5 cm Wanddicke bildete. Die Stahlwände dieses röhrenförmigen Raumes wurden mit je 4 Lagen Zeitungspapier ausgekleidet. Dann wurde der Raum mit einem Gemisch aus 15 % Natriumsilikatpulver (basisch) und 85 % Blähgraphit A gefüllt und mit einer kleinen Stahlplatte verdeckelt. Man erhitzte 1,5 Stunden auf 250°C. Nach dem Abkühlen wurde entformt. Man erhielt eine stabile Röhre aus Graphitmaterial, die als Rohrmanschette verwendet werden kann. Bei Beflammung erfolgte lebhafte Intumeszenz.

### Beispiel 8

In der angegebenen Form wurde bei 250°C eine Platte von 2 cm Dicke hergestellt (Raumgewicht ca. 500 kg/m³) unter Verwendung eines Gemisches aus 80 Teilen Blähgraphit A und 20 Teilen Ethylendiaminphosphat. Diese Platte wurde mit 50 Bohrungen mit einem Durchmesser von 4 mm versehen. Nun wurde die Platte zwischen zwei Edelstahlsiebe mit einer Maschenweite von ca. 3 mm eingebracht und bündig in ein quadratisches Kaminrohr (10 x 10 cm) eingebaut. Durch dieses Kaminrohr wurde jetzt ein Heißluftstrom geblasen, dessen Temperatur bis auf 800°C gesteigert wurde. Als die Gastemperatur 500°C erreicht hatte, begann sich die eingebaute Siebplatte aus dem Graphitmaterial aufgrund der erfolgenden Expansion zu schließen. Bei 650°C war das Kaminrohr dichtend gegen weiteren Durchtritt des Heizgases abgesperrt. Dieser Versuch simulierte die Möglichkeit, mit den erfindungsgemäßen Formteilen Brandschutzdichtungen in Klimakanäle, senkrechte oder waagerechte Kabelschächte oder Lüftungsrohre einzubauen.

## Patentansprüche

1. Verfahren zur Herstellung von intumeszenzfähigen Formteilen, dadurch gekennzeichnet, daß man Blähgraphite in Formen auf Temperaturen zwischen 150°C und 350°C erhitzt.

2. Verfahren gemäß Anspruch 1, dadurch gekennzeichnet, daß Blähgraphite verwendet werden, die als Blähmittel NOₓ und/oder SOₓ enthalten.

3. Verfahren gemäß Ansprüchen 1 und 2, dadurch gekennzeichnet, daß Gemische aus Blähgraphiten, Bindemitteln und/oder Füllstoffen verwendet werden.

4. Verfahren gemäß Ansprüchen 1 bis 3, dadurch gekennzeichnet, daß als Bindemittel Ethylendiaminphosphat verwendet wird.

## Claims

1. Process for producing intumescent mouldings, characterized in that expandable graphites are heated in moulds to temperatures between 150°C and 350°C.

2. Process according to Claim 1, characterized in that expandable graphites are used which contain NOₓ and/or SOₓ as expanding agents.

3. Process according to Claims 1 and 2, characterized in that mixtures of expandable graphites, binders and/or fillers are used.

4. Process according to Claim 1 to 3, characterized in that ethylenediamine phosphate is used as the binder.

## Revendications

1. Procédé de préparation de pièces moulées intumescentes, caractérisé en ce que l'on chauffe du graphite soufflé dans des moules à des températures de 150 à 350°C.

2. Procédé selon la revendication 1, caractérisé en ce que l'on utilise du graphite soufflé contenant en tant qu'agent gonflant NOₓ et/ou SOₓ.

3. Procédé selon les revendications 1 et 2, caractérisé en ce que l'on utilise des mélanges de graphite soufflé, de liants et/ou de matières de charge.

4. Procédé selon les revendications 1 à 3, caractérisé en ce que l'on utilise en tant que liant de l'éthylènediaminophosphate.
